# EUROPÄISCHE PATENTSCHRIFT

(11) **EP 3 856 700 B1**
(45) Veröffentlichungstag und Bekanntmachung des Hinweises auf die Patenterteilung: **19.04.2023**
(21) Anmeldenummer: 19779844.0
(22) Anmeldetag: 26.09.2019
(51) Int. Cl.: C04B 35/573, C04B 35/83, C04B 35/636, D01D 5/247, D01F 9/14

(54) **VERFAHREN ZUR HERSTELLUNG EINES CARBON-KERAMISCHEN FORMKÖRPERS**
METHOD OF PRODUCING A CARBON-CERAMIC SHAPED BODY
PROCÉDÉ DE PRODUCTION D'UN CORPS MOULÉ EN CARBONE-CÉRAMIQUE

(30) Priorität: 27.09.2018 DE 102018123946
(43) Veröffentlichungstag der Anmeldung: 04.08.2021
(73) Patentinhaber: Technikum Laubholz GmbH, 89143 Blaubeuren (DE)
(72) Erfinder: SCHNECK, Tanja, 70794 Filderstadt (DE); HERMANUTZ, Frank, 71229 Leonberg (DE)
(74) Vertreter: Held, Stephan
(86) Internationale Anmeldenummer: PCT/EP2019/076117
(87) Internationale Veröffentlichungsnummer: WO 2020/064972

(56) Entgegenhaltungen:
- WO-A1-03/050058
- DE-A1-102006 044 848
- JP-A- 2006 027 973

## Beschreibung

Die Erfindung betrifft ein Verfahren zur Herstellung eines Carbon-keramischen Formkörpers, der eine Carbonfaser-verstärkte Carbonmatrix und einen Gehalt an Siliciumcarbid und Silicium aufweist.

Wenn im Rahmen der späteren Darstellung der vorliegenden Erfindung von der Herstellung eines Carbon-keramischen Formkörpers gesprochen wird, dann handelt es sich um einen mit Kohlenstofffasern verstärkten keramischen Siliciumcarbid-Verbundwerkstoff der oben bezeichneten Art. Eine weitere Werkstoffbezeichnung könnte mit dem Begriff "Kohlenstofffaser-verstärktes Siliciumcarbid" oder "C-faserverstärktes SiC" oder, wie es in der Klasse der Verbundmaterialkeramiken eingeführt ist, kurz "C/SiC" erfolgen. Grundsätzlich sind noch folgende Abkürzungen üblich: C/SiC bedeutet Siliciumcarbid in einer Carbonmatrix, C/C-SiC-Si, dass in der Carbonmatrix Carbonfasern (C/C) und zudem noch SiC und Si enthalten sind. Diese weitergehenden Erläuterungen sollen es dem Fachmann erleichtern, die in der Fachliteratur verwendeten Begriffe verständnisvoll auf die vorliegende Erfindung anzuwenden.

Seit Langem ist es bekannt, dass die Oxidations- und Temperaturbeständigkeit von faserverstärkten Carbon-Verbundwerkstoffen durch Siliciumbeschichtung erhöht werden kann. Zum Einsatz kommen vor allem kohlenstofffaserverstärkte Verbundwerkstoffe, insbesondere mit einer SiC-Matrix. Nachteilig ist hier eine Kostensteigerung durch Zusatzmaterialien, wie Polymermatrizes, und/oder durch zusätzliche Verfahrensschritte, wie separate Carbonisierung der Präkursorfaser und der Polymermatrix, und ein somit erhöhter Energieaufwand. Nach dem Stand der Technik ist die Herstellung von faserverstärkten Keramiken, ausgehend von Präkursorfasern, ebenfalls bekannt. In der EP 2 041 044 A1 ist ein Si/SiC-Verbundwerkstoff beschrieben, der durch Silicierung von Papieren, die neben Cellulosefasern auch aus carbonisierendem Füllstoff und Bindemittel bestehen, durchgeführt wird. In der EP 1 284 251 A1 wird als Ausgangsmaterial Wellpappe mit einem Schlicker beschichtet oder in einem solchen eingebracht, pyrolysiert und anschließend siliciert. Durch dieses Verfahren werden inhomogene keramische Verbundwerkstoffe erhalten, die entsprechend geringere mechanische Eigenschaften zeigen. Der Vorteil der Lehre der WO 2005049524 A1 ist es, dass die Cellulosefasern zu Beginn mit dem Metallpulver vermengt werden, wodurch zwar eine homogene Verteilung des Metalls im Verbund erzielt und somit bessere mechanische Eigenschaften erreicht werden, aber eine große Menge an Metall zuvor eingeführt werden muss. Insgesamt weisen diese keramischen Verbundwerkstoffe sehr hohe Si- bzw. SiC-Anteile auf.

Es ist bekannt, dass C/C-Komposite an inerter Atmosphäre exzellente Eigenschaften besitzen. Um das Oxidationsverhalten von C/C-Kompositen zu verbessern, erfolgt eine Umsetzung der C/C-Komposite mit Si, wodurch die bekannten C/Si- bzw. C/C-SiC-Komposite erhalten werden. Aus dem Stand der Technik geht hervor, dass die Mikrostruktur des Carbon-Präkursors einen essentiellen Einfluss auf die späteren Eigenschaften des C/C-SiC-Körpers hat. Die Mikrostruktur lässt sich durch den Matrixpräkursor, die Faserstruktur, die Prozessparameter und das Faser-Matrix-Interface beeinflussen. Während des Carbonisierungsprozesses fallen durch die Umwandlung des Matrixpolymers zur Carbonmatrix Nebenprodukte an, welche sich in Poren sammeln. Zusätzlich führt die Umwandlung zu einem Schrumpfverhalten des Matrixpolymers, welches zur Entstehung von Rissen, jedoch in Faserrichtung durch die eingebetteten Verstärkungsfasern gehindert, verantwortlich ist. Durch dieses ausgebildete Rissnetzwerk können entstandene Nebenprodukte aus dem Verbundwerkstoff abgeleitet werden. Aufgrund der unterschiedlichen Wärmeausdehnungskoeffizienten der Carbonfaser und der carbonisierten Matrix führt das Abkühlen des carbonisierten faserverstärkten Verbundwerkstoffs zu inneren Spannungen und somit zu weiteren Spannungsrissen. Durch ein schwaches Faser-Matrix-Interface im carbonfaserverstärkten Verbundwerkstoff führen Delaminationen zwischen den Fasern und der Polymermatrix zur Verschlechterung der Mikrostruktur im carbonisierten Verbundwerkstoff. Durch anschließende Flüssigsilicierung dieser porösen C/C-Präkursoren werden C/C-SiC-Verbundwerkstoffe erhalten, wie es beispielweise aus D. Nestler et al., in 6th International Munich Chassis Symposium (Ed.: P. E. Pfeffer), Springer Vieweg, S. 605-627 (2015), bereits bekannt ist. Bei diesem Verfahren wird die Siliciumschmelze über Kapillarkräfte in den porösen Carbonpräkursor infiltriert und reagiert mit dem Kohlenstoffgerüst zu Siliciumcarbid. Das Silicieren eines porösen C/C-Präkursors mit einem hohen Grad an Delaminationen und Segmentierungsrissen führt zu einer hohen Konvertierung der Fasern zu SiC und somit zu schlechteren mechanischen Eigenschaften des C/C-SiC-Körpers. Als Lösung zur Verbesserung des Faser-Matrix-Interfaces ist aus der Literatur der Prozess zur Beschichtung der Fasern mit SiC oder pyrolytischem Kohlenstoff bekannt, welcher sehr kostspielig und zeitaufwändig ist (sh. Y. Cui, A. Li, B. Li, X. Ma, R. Bai, W. Zhang, M. Ren, "Microstructure and ablation mechanism of C/C-SiC composites", Journal of the European Ceramic Society, Bd. 34, S. 171-177 (2014)). Durch diese Beschichtung der Fasern wird das Faser-Matrix-Interface verbessert, so dass eine spezifisch angepasste C/C-Mikrostruktur mit dichten Segmenten aus Faserbündeln erhalten wird.

Schließlich ist auf die DE 10 2006 044 848 A1 zu verweisen. Diese offenbart ein Verfahren zur Herstellung eines carbidkeramischen Kontaktkörpers, bei welchem ein Vorkörper hergestellt, aus diesem durch Pyrolyse ein offenporöser Kohlenstoffkörper gewonnen und der Kohlenstoffkörper durch Infiltration mit Silicium keramisiert wird. Ein Ausgangsmaterial für den Vorkörper umfasst cellulosehaltiges Pulver und Pech-Fasern. Es enthält 10 bis 40% einer Kupferphase, 30 bis 55% einer Siliciumphase, 5 bis 25% einer Siliciumcarbidphase und 5 bis 15% einer Kohlenstoffphase, jeweils als Volumenanteil. Der pyrolysierte Vorkörper (Kohlenstoffkörper) ist offenporös. Der Vorkörper wird aus einem Holzwerkstoff mittels eines metallischen Pressgesenks hergestellt. Beispielsweise wird eine Holzpulvermischung aus Pulverharz, Holzmehl und Pech-Fasern (d.h. carbonisierbaren Fasern) hergestellt und gepresst. Damit sind die Pech-Fasern im Holzharz eingebettet. Die gesamte offene Porosität an einer Oberfläche des Vorkörpers sollte zwischen 5 und 30 Flächen-% liegen.

Der Stand der Technik nach der WO 03/050058 A1 betrifft ein Verfahren zur Herstellung eines Kohlenstoff-Keramikbauteils auf Basis von Kohlenstoff unter Verwendung eines cellulosehaltigen, insbesondere lignocellulosehaltigen Halbzeugformteils, das in einer nicht oxidierenden Gasatmosphäre pyrolysiert wird. Als Halbzeugformteil wird ein plattenförmiges Formteil einer speziellen Dichte und homogenen Dichteverteilung verwendet. Das plattenförmige Formteil kann an ein Polymer gebunden sein. Dabei kann es sich um eine Faserplatte handeln. In Betracht kommt als Formteil auch eine Faserplatte, die durch Heißpressen eines Gemisches aus mit Bindemittel vermischten lignocellulosehaltigen Kurz-Fasern (ca. 2 mm) hergestellt wird. Daher soll das Formteil auch aus Holzfasern und/oder Pflanzenfasern hergestellt werden können. Bei Fasern dieser Art handelt es sich um Kurzfasern.

Die JP 2006 027973 A betrifft insbesondere einen Reflektionsspiegel spezieller Art, wobei auch eine Carbonfaserverstärkung angesprochen wird. Bevorzugt wird es, dass eine (bereits fertige) Carbonfaser vielfältiger Art in ein Bindemittel einbezogen, danach Druck ausgeübt und ein verstärktes Carbongrundmaterial erhalten wird, das einer Carbonisierung unterzogen wird, der sich eine Silicierung anschließt. Demgegenüber bezieht die nachfolgend geschilderte Erfindung carbonisierbare textile Gebilde in Form von Endlosfasern, von Garnen und/oder von textilen Flächengebilden ein.

Es zeigt sich demzufolge, dass das eingangs bezeichnete Verfahren zur Herstellung eines Carbon-keramischen Formkörpers verbesserungsbedürftig ist. Daraus ergibt sich die Aufgabe der vorliegenden Erfindung, dieses Verfahren so weiterzubilden, dass es unter Kostenreduzierung bei Vermeidung von Zusatzmaterialien, wie Polymermatrizes, und/oder zusätzlichen Verfahrensschritten, wie einer separaten Carbonisierung einer Präkursorfaser und der Polymermatrix, durchgeführt werden kann. Darüber hinaus sollen bei dem erfindungsgemäßen Verfahren die aus dem Stand der Technik bekannten vorteilhaften Eigenschaften Carbon-keramischer Formkörper nicht verloren gehen, so sollen insbesondere hohe Werte der Bruchdehnung, des Biegemoduls und der scheinbaren interlaminaren Scherfestigkeit verbleiben.

Erfindungsgemäß wird die bezeichnete Aufgabe durch ein Verfahren zur Herstellung eines Carbon-keramischen Formkörpers, der eine Carbonfaser-verstärkte Carbonmatrix und einen Gehalt an Siliciumcarbid und Silicium aufweist, dadurch gelöst, dass ein carbonisierbarer Formkörper mit einer carbonisierbaren organischen Matrix, die auf Cellulose beruht und die mit eingebetteten carbonisierbaren textilen Gebilden, die carbonisierbare Chemiefasern abgewandelter Naturstoffe pflanzlicher Herkunft darstellen und die in Form von Endlosfasern, von Garnen und/oder von textilen Flächengebilden vorliegen, verstärkt ist, zu einem offenporigen porösen Formkörper einer offenen Porosität von 15 bis 60% carbonisiert und der offenporige poröse carbonisierte Formkörper anschließend einer Flüssigsilicierung zu dem Carbon-keramischen Formkörper unterzogen wird. Hierbei ist es bevorzugt, dass die Cellulose natürlichen Ursprungs ist oder in Form eines carbonisierbaren Chemiezellstoffs oder carbonisierbaren Papierzellstoffs eingesetzt wird. Es ist ferner vorteilhaft, wenn der Polymerisationsgrad der Cellulose optimiert wird, vorzugsweise zwischen etwa 108 und 5000, insbesondere zwischen etwa 250 und 2000, liegt.

Der besondere Vorteil des erfindungsgemäßen Verfahrens liegt darin, dass vielfältige carbonisierbare textile Gebilde eingesetzt werden können, die in Form von Endlosfasern, von Garnen und/oder textilen Flächengebilden vorliegen. Die carbonisierbaren textilen Flächengebilde liegen vorzugsweise als Gewebe, Wirkware, Strickware, Geflecht, Gelege, Wicklung oder als Vliesstoff vor. Die carbonisierbaren textilen Flächengebilde beruhen auf carbonisierbaren Chemiefasern auf Basis abgewandelter Naturstoffe pflanzlicher Herkunft. Es ist bevorzugt, wenn die carbonisierbaren Chemiefasern, auf Basis abgewandelter Naturstoffe pflanzlicher Herkunft Kupferseidefasern, Viskosefasern, Modalfasern, Kunstseide- und Celluloseacetatfasern, insbesondere als Acetat oder Triacetat, oder Alginatfasern darstellen. Für eine optimale Durchführung des erfindungsgemäßen Verfahrens im Hinblick auf das Verfahrensziel ist es vorteilhaft, wenn der Anteil der carbonisierbaren textilen Gebilde in dem Carbon-keramischen Formkörper zwischen etwa 10 und 90 Gew.-%, insbesondere zwischen etwa 20 und 75 Gew.-%, liegt. Schließlich kann es als vorteilhaft angegeben werden, dass der carbonisierbare Formkörper als Ausgangsmaterial des erfindungsgemäßen Verfahrens flächenförmig ist, wobei es besonders bevorzugt ist, dass mehrere flächenförmige Formkörper miteinander verpresst sind.

Es erscheint zweckmäßig, dem Fachmann einige wenige Informationen zu vermitteln, die ihm hilfreich sind, den carbonisierbaren Formkörper, wie oben bezeichnet, herzustellen. Als eine hinlängliche Richtlinie für den Fachmann könnte hierbei folgende technische Information dienen. Danach betrifft ein bevorzugtes Verfahren zur Herstellung eines carbonisierbaren Formkörpers, der erfindungsgemäß eingesetzt wird, ein Vorgehen, wonach die Cellulose als Zellstoff und/oder als Cellulose natürlichen Ursprungs in einer geschmolzenen ionischen Flüssigkeit gelöst wird, wobei in dem anfallenden Cellulose enthaltenden Lösungssystem die Menge an Cellulose zweckmäßigerweise etwa 2 bis 30 Gew.-%, insbesondere etwa 4 bis 15 Gew.-%, beträgt, das die Cellulose enthaltende Lösungssystem, gegebenenfalls mit einbezogenen eigenschaftsverändernden Additiven, mit einem textilen Gebilde gemischt und dieses Mischsystem zur Koagulation der in dem Lösungssystem enthaltenen Cellulose in ein Koagulationsmedium, insbesondere in ein wässriges Koagulationsmedium, eingebracht und der durch Koagulation entstandene Formkörper gewaschen und getrocknet wird. Hierbei wird die Temperatur der geschmolzenen ionischen Flüssigkeit vorzugsweise auf weniger als etwa 160°C, insbesondere weniger als etwa 130°C, und/oder auf mehr als etwa 20°C, insbesondere mehr als etwa 30°C, eingestellt. Ferner wird es bevorzugt, wenn das Lösungssystem eine Nullviskosität (gemessen mit einem Rotationsviskosimeter) zwischen etwa 2 und 1000 Pa.s, insbesondere zwischen etwa 10 und 250 Pa.s, aufweist. Ferner gilt es als vorteilhaft, wenn das Koagulationsmedium als Koagulationsmittel Wasser, Monoalkohole, insbesondere Methanol, Ethanol, Propanol und/oder Butanol, mehrwertige Alkohole, insbesondere Glycerin, Ethylenglykol, Diethylenglykol, Triethylenglykol, 1,4-Butandiol, 1,2-Propandiol, 1,3-Propandiol und/oder 1,6-Hexandiol, oder Mischungen dieser Koagulationsmittel enthält. Hierbei ist es zweckmäßig, wenn das Koagulationsmedium das Koagulationsmittel in einer Menge von etwa 5 bis 95 Gew.-%, insbesondere von etwa 20 bis 80 Gew.-%, enthält. Besonders vorteilhaft ist es, wenn das Cellulose enthaltende Lösungssystem vor der Vermischung mit den textilen Gebilden auf etwa 10 bis 140°C, insbesondere auf etwa 40 bis 120°C, und/oder das Koagulationsmedium auf eine Temperatur von etwa 20 bis 90°C, insbesondere etwa 20 bis 60°C, eingestellt wird. Von besonderem Vorteil ist es im Hinblick auf das weitere erfindungsgemäße Vorgehen, wenn nach Ausbildung des getrockneten Formkörpers eine weitergehende Formgebung in einer Heizpresse und/oder durch mechanische Einwirkung, insbesondere Schneiden, oder darauf eine Oberflächenbehandlung bzw. eine chemische Einwirkung, insbesondere ein Kleben, durchgeführt werden. Bei der Wahl der jeweiligen ionischen Flüssigkeit unterliegt die Erfindung keinen wesentlichen Einschränkungen. So kann es sich insbesondere um ionische Flüssigkeiten handeln, die auf Imidazolium, Oxazolium, Thiazolium, Piperidinium, Pyrrolidinium und Quinolinium beruhen.

Der vorstehend beschriebene Ausgangsformkörper des erfindungsgemäßen Verfahrens mit einer organischen Matrix, die auf Cellulose beruht und die mit carbonisierbaren textilen Gebilden verstärkt ist, wird erfindungsgemäß in einem Zwischenschritt zu einem porösen Formkörper carbonisiert. Hier geht man vorzugsweise wie folgt vor:
Der vorbekannte Formkörper aus der WO 2013098203 A2 (dort Anspruch 35) wird zu einem porösen carbonisierten Formkörper (C/C-Formkörper) weiterverarbeitet. Hierfür wird der vorbekannte Formkörper insbesondere in Inertgasatmosphäre carbonisiert. Die Carbonisierung erfolgt bei einer Temperatur zwischen etwa 400 °C und 3000 °C, insbesondere zwischen etwa 700 °C und 2400 °C. Während der Carbonisierung des carbonisierbaren Formkörpers wird eine Aufheizrate zwischen etwa 0,5 K/min und 10 K/min, insbesondere etwa 1 K/min und 5 K/min, angestrebt. Beim Carbonisieren eines zweidimensionalen Formkörpers empfiehlt es sich, diesen mit Gewichten zu beschweren, um einem Verformen während der Carbonisierung, impliziert durch das Schrumpfverhalten, entgegenzuwirken. Erwartungsgemäß zeigt der carbonisierte Formkörper in lichtmikroskopischen Bildern eine kompakte C/C-Struktur mit vereinzelten Poren, die sich aufgrund der entstandenen Pyrolyseprodukte im Formkörper bilden. Die Kompaktheit der Kohlenstoffstruktur des carbonisierten Formkörpers kann auf die hohe Faser-Matrix-Haftung zurückgeführt werden. Im Vergleich zu anderen bekannten carbonisierten Formkörpern auf der Basis von Carbonfasern und thermoplastischer bzw. duroplastischer Kunststoffe zeigt der erfindungsgemäße C/C-Formkörper eine hohe Faser-Matrix-Haftung, ohne dass eine zuvor durchgeführte Faserausrüstung und somit keine weiteren Verfahrensschritte erforderlich sind. Ein weiterer Vorteil dieses carbonisierten Formkörpers ist es, dass die Carbonisierung der Präkursorfaser, entsprechend der Cellulosefaser, nicht zuvor carbonisiert wird, sondern der gesamte Formkörper einer Carbonisierung am Stück unterzogen wird, wodurch erneut ein Prozessschritt eingespart wird.

Der carbonisierte Formkörper weist eine Carbonausbeute zwischen etwa 10 % und 40%, insbesondere von etwa 15% bis 35 % auf. Zur Erhöhung des Restkohlenstoffgehalts ergibt sich für den Fachmann die Möglichkeit, das textile Gebilde mit anorganischen Salzlösungen auszurüsten. Die im Rahmen der Erfindung besonders vorteilhaften anorganischen Lösungen sind phosphorhaltige Salze, wie Ammoniumdihydrogenphosphat (ADHP) oder Salze des p-Tosylats, wie Ammonium-p-tosylat. Das Ausrüsten des textilen Gebildes vor der Carbonisierung führt zu einer Erhöhung der Carbonausbeute, so dass ein carbonisierter Formkörper mit einem Restkohlenstoffgehalt von über etwa 30 % erhalten wird.

Die Carbonisierung wird vorzugsweise so gesteuert, dass sich in dem porösen carbonisierten Formkörper eine Porosität insbesondere von etwa 20 bis 55% einstellt. Diese Steuerung wird so erreicht, dass die Mikrostruktur im carbonisierbaren textilen Gebilde durch unterschiedliche Faktoren, wie das Lösungssystem, in welchem der Anteil der gelösten Cellulose in einer geschmolzenen ionischen Flüssigkeit variiert wird, die Einwirkdauer dieses Lösungssystems bevor es mittels eines Koagulationsmedium entfernt wird und/oder durch die Zugabe von anorganischen Salzlösungen, die zur Ausrüstung und somit zur Erhöhung der Carbonausbeute dienen, angelegt wird. Ferner kann ebenfalls eine Steuerung durch das Carbonisierungsprogramm erfolgen.

Das erfindungsgemäße Verfahren wird dann fortgeführt, indem der poröse carbonisierte Formkörper in einen mit Siliciumpulver und/oder Siliciumgranulat gefüllten Behälter, insbesondere einen Graphittiegel, gelegt und im Vakuum und/oder Schutzgas, insbesondere Argon oder Stickstoff, bis zu einer Temperatur oberhalb der Silicium-Schmelztemperatur aufgeheizt wird, wobei der poröse carbonisierte Formkörper über Kapillarkräfte mit dem flüssigen Silicium infiltriert wird und das Silicium mit dem Kohlenstoff des carbonisierten Formkörpers reagiert. Vorteilhaft ist es hierbei, dass nach dem Reagieren des Siliciums mit dem Kohlenstoff des porösen carbonisierten Formkörpers abgekühlt wird, insbesondere unter Anlegen von Vakuum.

Aufmerksamkeit soll im Rahmen der Fortführung des erfindungsgemäßen Verfahrens auch dem Gesichtspunkt zugewandt werden, in welchem Ausmaß der poröse carbonisierte Formkörper mit flüssigem Silicium infiltriert wird. Dabei hat es sich als vorteilhaft erwiesen, wenn der Carbon-keramische Formkörper gegenüber der Vorstufe in Form des porösen carbonisierten Formkörpers eine Gewichtszunahme von etwa 30 bis 140 Gew.-%, insbesondere von etwa 55 bis 110 Gew.-%, aufweist.

Weiteres zur Silicierung:
Der letzte Schritt der Erfindung wird durch die Silicierung des carbonisierten Formkörpers abgerundet. Hierfür findet die im Stand der Technik bekannte Silicierung mit flüssigem Silicium Anwendung (siehe z. B. D. Nestler et al., in 6th International Munich Chassis Symposium (Ed.: P. E. Pfeffer), Springer Vieweg, S. 605-627 (2015)). Der zu silicierende poröse carbonisierte Formkörper, welcher vorzugsweise vollständig von einem offenen Porensystem durchzogen sein muss, wird z.B. in einem Graphitbehälter, dessen Boden mit Siliciumpulver und/oder Siliziumgranulat befüllt ist, platziert. Als vorteilhaft hat sich die sogenannte Dochttechnik erwiesen. Hierzu wird der zu silicierende poröse Formkörper auf einen Kohlenstoffkörper in Form von Dochten gelegt, welche bezogen auf das Silicium ein sehr saugfähiges Verhalten aufweisen. Diese Dochte befinden sich teilweise im Siliciumpulver und/oder Siliciumgranulat, so dass das flüssige Silicium durch die Dochtkörper aufsteigen und die zu silicierenden Formkörper weiter infiltrieren kann. Durch diese Dochtkörper kommt es zu keinem direkten Kontakt zwischen dem zu silicierenden porösen carbonisierten Formkörper und dem flüssigen Silicium, was sich insofern als vorteilhaft erwiesen hat, dass ein aufwendiges Entfernen von überschüssigem Silicium vom silicierten Carbon-keramischen Formkörper ausbleibt. Aufgrund der hervorragenden Benetzbarkeit des Siliciums gegenüber Kohlenstoff erfolgt eine durch Kapillarkräfte bewirkte Infiltration des Risssystems im carbonisierten Formkörper. Das so infiltrierte Silicium kann somit dort mit dem Matrixkohlenstoff zu Siliciumcarbid reagieren. Die Umwandlung zu Siliciumcarbid dient als Diffusionssperre gegenüber dem flüssigen Silicium, damit das flüssige Silicium daran gehindert wird, weiter in die Matrix bis zur eingebetteten Kohlenstofffaserverstärkung vorzudringen, um diese ebenfalls anzugreifen.

Bei der Flüssigsilicierung ist es von Vorteil, wenn der poröse carbonisierte Formkörper mit flüssigem Silicium im Temperaturbereich von etwa 1450°C bis 2200°C, insbesondere zwischen etwa 1600°C und 1700 °C im Vakuum bzw. insbesondere bei Temperaturen von etwa 1400°C bis 2200°C, insbesondere von etwa 1500°C bis 2000°C, in Inertgas infiltriert wird. Wenn als Verfahrensbedingung eine Silicierung im Vakuum gewählt wird, ist vorzugsweise darauf zu achten, dass zuvor Reste von reaktiven Gasen durch Spülen mit Inertgas vollständig entfernt werden. Es kann hier eine schnelle Aufheizrate gewählt werden. Als Imprägnier- und Reaktionszeit bietet sich ein Bereich von etwa 10 Minuten bis 1 Stunde, bevorzugt eine Reaktionszeit von etwa 30 Minuten, an.

Das Erzeugnis des erfindungsgemäßen Verfahrens in Form des Carbon-keramischen Formkörpers weist eine Vielzahl vorteilhafter Eigenschaften auf, wie ein Porenvolumen, durch welche ein Fluid zugänglich ist, von maximal etwa 15% (nach DIN EN 1389:2004-03), besonders bevorzugt von nicht mehr als etwa 12% und/oder eine Bruchdehnung im Bereich von etwa 0,16% bis 0,21% (nach DIN EN 658-3:2002-11) und/oder eine scheinbare interlaminare Scherfestigkeit von etwa 0,5 bis 5 MPa (nach DIN EN 658-5:2003-03), insbesondere von etwa 1 bis 4 MPa. Diese vorteilhaften mechanischen Eigenschaften werden in einer verfahrenstechnisch günstigen Weise erhalten, insbesondere unter Reduzierung der im Stand der Technik erforderlichen Verfahrensschritte, wie einer separaten Carbonisierung der Präkursorfaser und der jeweiligen Polymermatrix. Als weitere vorteilhafte Eigenschaften des erfindungsgemäß erhaltenen Carbon-keramischen Formkörpers sind die hohe Biegefestigkeit, die hohe Temperaturwechselbeständigkeit, gute Wärmeleitfähigkeit und Beständigkeit gegenüber oxidativen Einwirkungen zu nennen. Aufgrund der geringen Dichte findet er Anwendung im Anlagen-, Leicht- und Maschinenbau. Dank der geringen Wärmeausdehnung und der hohen spezifischen Festigkeit wird er auch in der Luft- und Raumfahrt verwendet. Konkrete Bespiele sind Chargiergestelle für die Wärmebehandlung von Metallteilen oder für ausdehnungsarme, hochsteife Teleskopstrukturen für die Telekommunikation und den Satellitenbau. Er eignet sich im Gegensatz zu monolithischen Keramiken als Hochleistungsbremsen und Reibbelägen in der Fahrzeugtechnik und Hochleistungsaufzügen. Dank des geringen Gewichts und der hohen Bruchzähigkeit findet der erfindungsgemäße Carbon-keramische Formkörper ebenfalls Anwendung als Rüstung und in der Verarbeitung von Teilen für Gasturbinen. Durch den geringen Wärmeausdehnungskoeffizienten und die hohe Wärmstabilität kann er auch als Wärmeschutzsystempanel eingesetzt werden. Durch die Verwendung von preiswerter Cellulose als Verstärkungsfaser im Rahmen des erfindungsgemäßen Verfahrens und auch als Matrix werden die Herstellungskosten im Vergleich zu denen der Verfahren des Standes der Technik merklich gesenkt. Dank des nachwachsenden angesprochenen biobasierten Rohstoffs kann zudem die CO₂-Bilanz gesenkt werden.

Insgesamt lässt sich zu den Vorteilen, die mit der vorliegenden Erfindung verbunden sind, folgendes feststellen: Einsparung von Prozessschritten und Energie bei der Herstellung, da eine Carbonisierung direkt zum porösen carbonisierten Formkörper führt, breite Anwendbarkeit dank hervorragender Eigenschaften, Kostenersparnis bei der Herstellung aufgrund der Verwendung preiswerter Ausgangsmaterialien (Cellulose), Verwendung von Rohstoffen aus erneuerbaren Ressourcen, gewünschte Formgebung der Form- bzw. Bauteile bereits am Präkursor möglich, wodurch zusätzliche Bearbeitungsschritte umgangen werden.

Abschließend soll die vorstehend geschilderte Erfindung allgemein und übergreifend auch unter Einbezug technologischer Gesichtspunkte weitergehend erläutert werden:
Die nicht-carbonisierten Verstärkungsfasern werden von einer organischen Matrix, bestehend aus Cellulose, eingebettet, so dass aufgrund der Oberflächenfunktionalitäten der Faser und Matrix chemische Bindungen eingegangen werden können, wodurch die Faser-Matrix-Haftung gestärkt wird. Im Carbonisierungsschritt des Formkörpers, bestehend aus in eine Matrix eingebetteten Verstärkungsfasern, führt diese verbesserte Faser-Matrix-Anbindung dazu, dass diese Anbindung zusätzlich gestärkt wird, da eine gleichzeitige Carbonisierung der Fasern und der Matrix erfolgt. Diese gleichzeitige Carbonisierung bewirkt, dass die Carbonmatrix perfekt die zur Carbonfaser umgewandelte Verstärkungsfaser umgibt. So führt die Silicierung im letzten Prozessschritt nicht dazu, dass die zu Carbonfaser verwandelten Verstärkungsfasern mit dem flüssigen Silicium zu Siliciumcarbid reagieren. Letztendlich kann für den erfindungsgemäßen Carbon-keramischen Formkörper nach der Silicierung eine Si-Aufnahme von etwa 55% bis 110% im Vergleich zu 53% der C/C-SiC-Formkörper nach dem Stand der Technik verzeichnet werden. Die Carbon-keramische Matrix des Carbon-keramischen Formkörpers besteht hauptsächlich zu etwa 40 bis 75 Gew.-% aus Siliciumcarbid, insbesondere zu etwa 50 bis 60 Gew.-%, und ebenfalls aus etwa 1 bis 15 Gew.-% freiem Silicium, vorzugsweise aus etwa 2 bis 11 Gew.-% freiem Silicium, und vorzugsweise aus etwa 20 bis 60 Gew.-% Kohlenstoff, insbesondere etwa 25 bis 50 Gew.-% Kohlenstoff. Nach der Silicierung sind die Verstärkungsfasern weiterhin intakt in die keramische Matrix eingebettet, dadurch, dass die Carbonmatrix im vorherigen Verfahrensschritt die Verstärkungsfasern vollständig umschlossen und somit ein Durchdringen des flüssigen Siliciums bis zur carbonisierten Verstärkungsfaser verhindert hat. So wird im Wesentlichen während der Silicierung nur die Carbonmatrix des carbonisierten Formkörpers zu Siliciumcarbid umgesetzt, welche besonders bevorzugt nicht vollständig zu Siliciumcarbid reagiert ist, sondern noch aus carbonisierter Carbonmatrix besteht, wodurch die mechanischen Eigenschaften des Carbon-keramischen Formkörpers vorteilhaft beeinflusst werden.

Der durch die Carbonisierung beeinflusste Massenverlust und Volumenschrumpf vervollständigt die Rissstruktur im faserverstärkten carbonisierten Formkörper. Die in den Poren eingeschlossenen Pyrolysegase können dann über das angelegte Rissmuster entweichen, wodurch dieses mit den Poren verzweigt und somit eine offenporige Struktur im carbonisierten Formkörper erreicht wird. In Hinblick auf die Silicierung ist eine offenporige Struktur vorteilhaft. Die Rissstruktur der faserverstärkten Formkörper nach dem Stand der Technik ist nur schwer einstellbar, da die Faser-Matrix-Anbindung entsprechend eingestellt werden muss. Im erfindungsgemäßen carbonisierten Formkörper ist es dem Fachmann möglich, je nach den Anforderungen an das Endprodukt die offenporige Struktur anzupassen. Vorteilhaft ist in diesem Fall die gute Faser-Matrix-Anbindung, so dass gewünschte Risse sich nur in der Matrix bilden und die Verstärkungsfasern während der Silicierung größtenteils unversehrt bleiben. Die offene Porosität des carbonisierten Formkörpers lässt sich durch die Konzentration der Matrixlösung zu Beginn der Herstellung einstellen. Es wird eine offene Porosität im Bereich von etwa 15% bis 60%, insbesondere von etwa 20% bis 55%, erreicht. Die offene Porosität im carbonisierten Formkörper beeinflusst weiter die Siliciumaufnahme und die offene Porosität im erfindungsgemäß erhaltenen Formkörper. Eine hohe offene Porosität im Carbon-faserverstärkten Formkörper führt zu einer hohen Siliciumaufnahme, welche bis zu über 100% möglich ist. Die Porosität des erfindungsgemäßen aus faserverstärktem Siliciumcarbid bestehenden Carbon-keramischen Formkörpers liegt im Bereich von etwa 5% bis 13%, insbesondere von etwa 2 % bis 45 %, wodurch eine sehr kompakte Struktur im silicierten Carbon-keramischen Formkörper erhalten wird. Durch die offene Porosität lassen sich dann auch die mechanischen Eigenschaften des erfindungsgemäßen Formkörpers einstellen. So können Biegemodule von bis zu etwa 9 MPa erreicht werden, die über dem Formkörper des Standes der Technik liegen, welcher zum Vergleich angefertigt wurde.

Die Erfindung wird weiter anhand der nachfolgenden Beispiele näher erläutert.

### Beispiel 1:

Das erfindungsgemäße Verfahren wird mit dem Produkt gestartet, das nach dem Verfahren der WO 2013098203 A2 erhalten werden kann. Im Einzelnen: Eine Cellulosefaser (weitergehende Definition: kommerziell erhältliche Reifencordfaser der Firma Glanzstoff, 1k Filamente, 1840 dtex) wird zuvor durch eine 6 %-ige Lösung von Cellulose in Ethylmethylimidazoliumacetat (EMIM-Acetat) benetzt, auf eine Metallform mit den Maßen 18 × 18 × 0,1 cm³ so nassgewickelt, dass nach vier Lagen die Metallform um 90° gedreht wird. Die Metallform wird sechsmal gedreht, so dass insgesamt ein 24-lagiger Formkörper entsteht. Dieser 24-lagige Formkörper wird 45 min bei 70°C getempert. Die als Lösemittel dienende ionische Flüssigkeit (EMIM-Acetat) wird dreimal in einem wässrigen Koagulationsbad ausgewaschen. Anschließend erfolgt ein Trocknen des Formkörpers in einer Heizpresse unter einem Druck von 6 N/cm² sowie bei einer Temperatur von 80°C für 1 h. Die Carbonisierung erfolgt in Schutzgasatmosphäre in fünf Schritten: zu Beginn wird der Formkörper mit einer Heizrate von 10 K/min auf 120 °C gebracht. Nach einer Haltezeit von 30 min erfolgt mit 5 K/min ein Aufheizen bis 200 °C. Durch ein weiteres Absenken der Heizrate auf 1 K/min bis 260 °C wird dem Schrumpfverhalten entgegengewirkt. Der letzte Anstieg der Temperatur auf 1650 °C erfolgt mittels einer Heizrate von 5 K/min. Nach dem Abkühlen liegt ein carbonisierter Formkörper mit einer Carbonausbeute von 24 % vor. Anschließend erfolgt die Silicierung dieses carbonisierten Formkörpers. Dieser wird mit der siebenfachen Menge an Reinst-Silicium in Pulverform zusammengebracht. Die Silicierung findet im Vakuum bei 1650 °C statt. Das anschließende Abkühlen erfolgt ebenfalls im Vakuum bis zu einer Temperatur von 150 °C.

Es ergibt sich ein stabiler Carbon-keramischer Formkörper mit einer Siliciumaufnahme von 72%, bezogen auf den carbonisierten Formkörper. Der erfindungsgemäße Carbon-keramische Formkörper besitzt eine offene Porosität von 6%, einen Biegemodul von 4,7 MPa, eine Bruchfestigkeit von 20,1 MPa und eine scheinbare interlaminare Scherfestigkeit von 2,7 MPa.

### Beispiel 2:

Angelehnt an das Beispiel 1 wird eine Cellulosefaser zuvor durch eine Lösung, bestehend aus einer 8%-igen Lösung von Cellulose in EMIM-Acetat, benetzt, auf eine Metallform mit den Maßen 18 × 18 × 0,1 cm³ so nassgewickelt, dass ein 24-lagiger Formkörper entsteht. Die darauffolgenden Prozessschritte (Waschen, Trocknen und Carbonisieren) werden wie in Beispiel 1 durchgeführt und führen zu einem carbonisierten Formkörper mit einer Carbonausbeute von 22%. Anschließend wird dieser siliciert (sh. Beispiel 1), um einen erfindungsgemäßen Carbon-keramischen Formkörper zu erhalten.

Es ergibt sich ein stabiler Carbon-keramischer Formkörper mit einer Siliciumaufnahme von 104%, bezogen auf den carbonisierten Formkörper. Der erhaltene faserverstärkte Carbon-keramische Formkörper besitzt eine offene Porosität von 11%, einen Biegemodul von 8,1 MPa, eine Bruchfestigkeit von 18,2 MPa und eine scheinbare interlaminare Scherfestigkeit von 1,1 MPa.

### Beispiel 3:

Es wird, wie in Beispiel 1 beschrieben, ein aus Cellulose gewickelter, 24-lagiger Formkörper hergestellt. Die als Lösungsmittel dienende ionische Flüssigkeit (EMIM-Acetat) wird dreimal in einem Koagulationsbad, bestehend aus einer wässrigen 0,4 M ADHP-Lösung (ADHP: Ammoniumdihydrogenphosphat), ausgewaschen, während gleichzeitig der Formkörper mit ADHP ausgerüstet wird. Die darauffolgenden Prozessschritte (Trocknen und Carbonisieren) werden wie in Beispiel 1 durchgeführt und führen zu einem carbonisierten Formkörper mit einer Carbonausbeute von 31%. Anschließend wird entsprechend dem Vorgehen nach Beispiel 1 eine Silicierung durchgeführt, um den erfindungsgemäßen Carbon-keramischen Formkörper zu erhalten.

Es ergibt sich ein stabiler Carbon-keramischer Formkörper mit einer Siliciumaufnahme von 59%, bezogen auf den carbonierten Formkörper. Der erhaltene faserverstärkte Carbon-keramische Formkörper besitzt eine offene Porosität von 6%, einen Biegemodul von 11 MPa, eine Bruchfestigkeit von 45,1 MPa und eine scheinbare interlaminare Scherfestigkeit von 2,5 MPa.

## Patentansprüche

1. Verfahren zur Herstellung eines Carbon-keramischen Formkörpers, der eine Carbonfaser-verstärkte Carbonmatrix und einen Gehalt an Siliciumcarbid und Silicium aufweist, **dadurch gekennzeichnet, dass** ein carbonisierbarer Formkörper mit einer carbonisierbaren organischen Matrix, die auf Cellulose beruht und die mit eingebetteten carbonisierbaren textilen Gebilden, die carbonisierbare Chemiefasern abgewandelter Naturstoffe pflanzlicher Herkunft darstellen und die in Form von Endlosfasern, von Garnen und/oder von textilen Flächengebilden vorliegen, verstärkt ist, zu einem offenporigen porösen Formkörper einer offenen Porosität von 15 bis 60% carbonisiert und der offenporige poröse carbonisierte Formkörper anschließend einer Flüssigsilicierung zu dem Carbon-keramischen Formkörper unterzogen wird.

2. Verfahren nach Anspruch 1, **dadurch gekennzeichnet, dass** die Cellulose natürlichen Ursprungs ist oder in Form eines carbonisierbaren Chemiezellstoffs oder carbonisierbaren Papierzellstoffs eingesetzt wird.

3. Verfahren nach Anspruch 1 oder 2, **dadurch gekennzeichnet, dass** der Polymerisationsgrad der Cellulose zwischen etwa 108 und 5500 liegt.

4. Verfahren nach einem der Ansprüche 1 bis 3, **dadurch gekennzeichnet, dass** die carbonisierbaren Chemiefasern Kupferseidefasern, Viskosefasern, Modalfasern oder Kunstseidefasern darstellen.

5. Verfahren nach mindestens einem der Ansprüche 1 bis 4, **dadurch gekennzeichnet, dass** die carbonisierbaren textilen Flächengebilde als Gewebe, Wirkware, Strickware, Geflecht, Gelege, Wicklung oder als Vliesstoff vorliegen.

6. Verfahren nach mindestens einem der Ansprüche 1 bis 5, **dadurch gekennzeichnet, dass** der Anteil der carbonisierbaren textilen Gebilde in dem Carbon-keramischen Formkörper zwischen 10 und 90 Gew.-% liegt.

7. Verfahren nach mindestens einem der Ansprüche 1 bis 6, **dadurch gekennzeichnet, dass** der carbonisierbare Formkörper flächenförmig ist.

8. Verfahren nach Anspruch 7, **dadurch gekennzeichnet, dass** mehrere flächenförmige Formkörper miteinander verpresst sind.

9. Verfahren nach mindestens einem der vorhergehenden Ansprüche, **dadurch gekennzeichnet, dass** die Carbonisierung so gesteuert wird, dass sich in dem offenporigen porösen carbonisierten Formkörper eine offene Porosität von 20 bis 55% einstellt.

10. Verfahren nach mindestens einem der Ansprüche 1 bis 9, **dadurch gekennzeichnet, dass** der offenporige poröse carbonisierte Formkörper in einen mit Siliciumpulver und/oder Siliciumgranulat gefüllten Behälter, insbesondere einen Graphittiegel, gelegt und im Vakuum und/oder Schutzgas bis zu einer Temperatur oberhalb der Silicium-Schmelztemperatur aufgeheizt wird, wobei der offenporige poröse carbonisierte Formkörper über Kapillarkräfte mit dem flüssigen Silicium infiltriert wird und das Silicium mit dem Matrix-Kohlenstoff des offenporigen porösen carbonisierten Formkörpers reagiert.

11. Verfahren nach Anspruch 10, **dadurch gekennzeichnet, dass** nach dem Reagieren des Siliciums mit dem Kohlenstoff des offenporigen porösen carbonisierten Formkörpers unter Anlegen von Vakuum abgekühlt wird.

12. Verfahren nach mindestens einem der Ansprüche 1 bis 11, **dadurch gekennzeichnet, dass** der offenporige poröse carbonisierte Formkörper in einem Ausmaß mit flüssigem Silicium infiltriert wird, dass der Carbon-keramische Formkörper gegenüber der Vorstufe in Form des offenporigen porösen carbonisierten Formkörpers eine Gewichtszunahme von etwa 30 bis 140 Gew.-% aufweist.

## Claims

1. A method of producing a carbon-ceramic shaped body comprising a carbon fibre-reinforced carbon matrix and a content of silicon carbide and silicon, **characterised in that** a carbonisable shaped body having a carbonisable organic matrix based on cellulose and reinforced with embedded carbonisable textile structures, which are carbonisable synthetic fibres of modified natural substances of plant origin and which are present in the form of endless fibres, yarns and/or planar textile structures, has been carbonised to form an open-pore porous shaped body with an open porosity of from 15 to 60% and the open-pore porous carbonised shaped body is then subjected to a liquid silicisation to give the carbon-ceramic shaped body.

2. The method according to claim 1, **characterised in that** the cellulose is of natural origin or is used in the form of a carbonisable dissolving pulp or carbonisable paper pulp.

3. The method according to claim 1 or claim 2, **characterised in that** the degree of polymerisation of the cellulose is between approximately 108 and 5500.

4. The method according to one of claims 1 to 3, **characterised in that** the carbonisable synthetic fibres are cuprammonium rayon fibres, viscose fibres, modal fibres or artificial silk fibres.

5. The method according to at least one of claims 1 to 4, **characterised in that** the carbonisable planar textile structures are present in the form of woven fabric, warp knitted fabric, weft knitted fabric, braiding, laid scrim, winding or nonwoven fabric.

6. The method according to at least one of claims 1 to 5, **characterised in that** the proportion of the carbonisable textile structure in the carbon-ceramic shaped body is between 10 and 90 wt.%.

7. The method according to at least one of claims 1 to 6, **characterised in that** the carbonisable shaped body is planar.

8. The method according to claim 7, **characterised in that** a plurality of planar shaped bodies are pressed together.

9. The method according to at least one of the preceding claims, **characterised in that** the carbonisation is controlled such that an open porosity of from 20 to 55% is established in the open-pore porous carbonised shaped body.

10. The method according to at least one of claims 1 to 9, **characterised in that** the open-pore porous carbonised shaped body is placed in a container filled with silicon powder and/or granular silicon material, especially is placed in a graphite crucible, and is heated in a vacuum and/or protective gas to a temperature above the silicon melting point, the open-pore porous carbonised shaped body being infiltrated with the liquid silicon via capillary forces and the silicon reacting with the matrix carbon of the open-pore carbonised shaped body.

11. The method according to claim 10, **characterised in that**, following the reaction of the silicon with the carbon of the open-pore porous carbonised shaped body, the shaped body is cooled under application of a vacuum.

12. The method according to at least one of claims 1 to 11, **characterised in that** the open-pore porous carbonised shaped body is infiltrated with liquid silicon to such an extent that the carbon-ceramic shaped body, as compared to the precursor in the form of the open-pore porous carbonised shaped body, has a weight increase of from approximately 30 to 140 wt.%.

## Revendications

1. Procédé de fabrication d'un corps moulé en carbone-céramique, qui présente une matrice carbonée renforcée par des fibres de carbone et une teneur en carbure de silicium et en silicium, **caractérisé en ce qu'**un corps moulé pouvant être carbonisé avec une matrice organique pouvant être carbonisée, qui est à base de cellulose et qui est renforcée par des structures textiles pouvant être carbonisées incorporées, qui constituent des fibres chimiques pouvant être carbonisées de substances naturelles transformées d'origine végétale et qui sont présentes sous la forme de fibres sans fin, de fils et/ou de structures plates textiles, est carbonisé pour obtenir un corps moulé poreux à pores ouverts d'une porosité ouverte de 15 à 60 % et le corps moulé carbonisé poreux à pores ouverts est ensuite soumis à une infiltration par du silicium liquide pour obtenir le corps moulé en carbone-céramique.

2. Procédé selon la revendication 1, **caractérisé en ce que** la cellulose est d'origine naturelle ou est employée sous la forme d'une pâte à usage chimique pouvant être carbonisée ou d'une pâte chimique à papier pouvant être carbonisée.

3. Procédé selon la revendication 1 ou 2, **caractérisé en ce que** le degré de polymérisation de la cellulose est compris entre environ 108 et 5500.

4. Procédé selon l'une quelconque des revendications 1 à 3, **caractérisé en ce que** les fibres chimiques pouvant être carbonisées constituent des fibres de cupro, des fibres de viscose, des fibres de modal ou des fibres de rayonne.

5. Procédé selon au moins l'une quelconque des revendications 1 à 4, **caractérisé en ce que** les structures plates textiles pouvant être carbonisées sont présentes en tant que tissu, tissu à mailles, tissu tricoté, tissu tressé, un tissu inséré, un enroulement ou en tant que tissu non-tissé.

6. Procédé selon au moins l'une quelconque des revendications 1 à 5, **caractérisé en ce que** la fraction des structures textiles pouvant être carbonisées dans le corps moulé en carbone-céramique se situe entre 10 et 90 % en poids.

7. Procédé selon au moins l'une quelconque des revendications 1 à 6, **caractérisé en ce que** le corps moulé pouvant être carbonisé est de forme plane.

8. Procédé selon la revendication 7, **caractérisé en ce que** plusieurs corps moulés de forme plane sont compressés les uns avec les autres.

9. Procédé selon au moins l'une quelconque des revendications précédentes, **caractérisé en ce que** la carbonisation est commandée de telle sorte qu'une porosité ouverte de 20 à 55 % est réglée dans le corps moulé carbonisé poreux à pores ouverts.

10. Procédé selon au moins l'une quelconque des revendications 1 à 9, **caractérisé en ce que** le corps moulé carbonisé poreux à pores ouverts est placé dans un contenant rempli de poudre de silicium et/ou de granulés de silicium, en particulier un creuset en graphite et est chauffé sous vide et/ou dans le gaz protecteur jusqu'à une température supérieure à la température de fusion du silicium, dans lequel le corps moulé carbonisé poreux à pores ouverts est infiltré par le silicium liquide par l'intermédiaire de forces capillaires et le silicium réagit avec le carbone de matrice du corps moulé carbonisé poreux à pores ouverts.

11. Procédé selon la revendication 10, **caractérisé en ce qu'**un refroidissement est effectué après la réaction du silicium avec le carbone du corps moulé carbonisé poreux à pores ouverts en appliquant du vide.

12. Procédé selon au moins l'une quelconque des revendications 1 à 11, **caractérisé en ce que** le corps moulé carbonisé poreux à pores ouverts est infiltré avec du silicium liquide dans une telle mesure que le corps moulé de carbone-céramique par rapport à l'étape précédente sous la forme du corps moulé carbonisé poreux à pores ouverts présente une augmentation de poids d'environ 30 à 140 % en poids.
